(19) Europäisches Patentamt
European Patent Office
Office européen des brevets

(11) **EP 1 143 382 A2**

(12) **EUROPEAN PATENT APPLICATION**

(43) Date of publication:
**10.10.2001 Bulletin 2001/41**

(51) Int Cl.7: **G06T 15/00**

(21) Application number: **01303323.8**

(22) Date of filing: **09.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.04.2000 JP 2000106320**
**27.03.2001 JP 2001089388**

(71) Applicant: **Sony Computer Entertainment Inc.**
**Tokyo 107-0052 (JP)**

(72) Inventor: **Imanishi, Hiroki, c/o Sony Computer**
**Minato-ku, Tokyo 107-0052 (JP)**

(74) Representative: **Turner, James Arthur et al**
**D. Young & Co.,**
**21 New Fetter Lane**
**London EC4A 1DA (GB)**

(54) **Quantity display method, program and information processing device**

(57)    A quantity to be displayed is obtained, and the quantity thus obtained is associated with coordinate points (11a, 12a, 13a). These coordinate points and predetermined coordinate points (18, 19) are connected to one another to create a closed curved surface 30 in a virtual space. The closed curved surface is subjected to rendering processing to visually display the desired quantity.

## FIG.1A

## FIG.1B

## FIG.1C

**Description**

The present invention relates to a technique of displaying quantities such as time, speed, etc. on a display device.

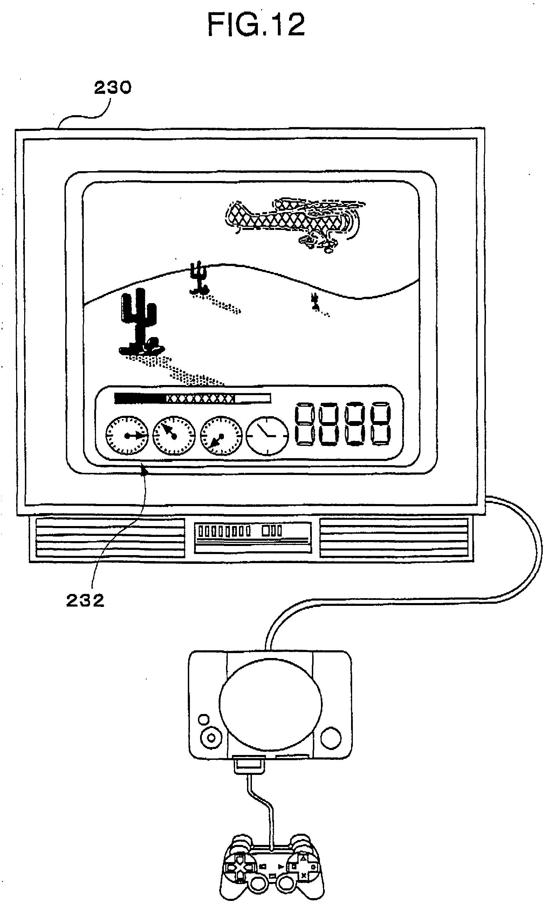

When various quantities such as time, speed, etc. are displayed on a display device in such fields as a computer, a TV game or the like, it has been standard to schematically draw measuring meters such as a clock, a speedometer, etc. For example, in Fig 12 showing a scene of a TV game, information on time, speed, etc. which are required to advance the TV game is displayed on a TV receiver 230 in such a style as indicated by reference numeral 232. Besides, a figure imitating a clock as a screen saver or the start-up display image is often displayed. In this case, most of measuring meters to be displayed on a display device are two-dimensionally displayed as if the actual meters are viewed from the front.

The above display method has advantages that it is technically simple and the quantities displayed are easily recognizable, however, such a display styles of the measuring meters lack a sense of beauty and it is difficult to attract user's interest. Further, the quantity display styles of the measuring meters are almost uniform although the raphic display styles of characters, backgrounds, etc. in games are extremely diversified. Therefore, various display styles for the meters are also widely desired.

Furthermore, when a meter such as a clock or the like is displayed as a screen saver or on a start-up display image, it is not necessarily required to have such functionality that the quantity thereof is easily discernable, and it is sufficient to merely to inform the user that the computer is operating or that the computer is carrying out the processing. Therefore, it is more important for the display style to attract user's interest in its design than its functionality.

Various respective aspects and features of the invention are defined in the appended claims.

The present invention has been implemented in view of the foregoing situation, and has embodiments which can provide a technique of displaying quantities in various display styles.

According to the present invention, there is provided a method of displaying quantities which is characterized by comprising: a process of obtaining a quantity to be displayed; a process of converting the quantity into parameters (parameter group) to determine the coordinate points in a virtual space that correspond to the quantity; a process of connecting respective points of a point group in the virtual space containing at least the above coordinate points with curved lines; and a process of rendering the curved lines, thereby displaying the quantity.

The invention will now be described by way of example with reference to the accompanying drawings, throughout which like parts are referred to by like references, and in which:

Figs. 1A to 1C are diagrams showing a method of creating a closed curved surface corresponding to the time;
Fig. 2 is a diagram showing the closed curved surface corresponding to the time;
Figs. 3A to Fig. 3C are diagrams showing a method of creating a closed curved surface corresponding to speed;
Fig. 4 is a block diagram showing the functional construction of an entertainment apparatus to which the present invention is applied;
Fig. 5 is a flowchart showing the processing of an embodiment of the present invention;
Fig. 6 is a diagram showing a closed curved surface which is displayed by using a wire frame method;
Fig. 7 is a diagram showing a closed curved surface which is displayed after being subjected to shading;
Fig. 8 is a diagram showing a closed curved surface which is displayed after being subjected to texture mapping;
Fig. 9 is an overview diagram showing an external appearance of entertainment system;
Fig. 10 is a block diagram showing the internal construction of the entertainment apparatus;
Fig. 11 is a diagram showing a controller; and
Fig. 12 is a diagram showing a conventional quantity displaying method.

A preferred embodiment according to the present invention will be described hereunder with reference to the accompanying drawings. In the following embodiment, it is assumed that a closed curved surface is created and displayed on the basis of the quantity to be displayed.

First, an entertainment apparatus to which the present invention is applicable will be described. It is needless to say that the present invention is not limited to entertainment apparatuses, and it may be applied to general information processing devices such as a personal computer, a TV game, etc.

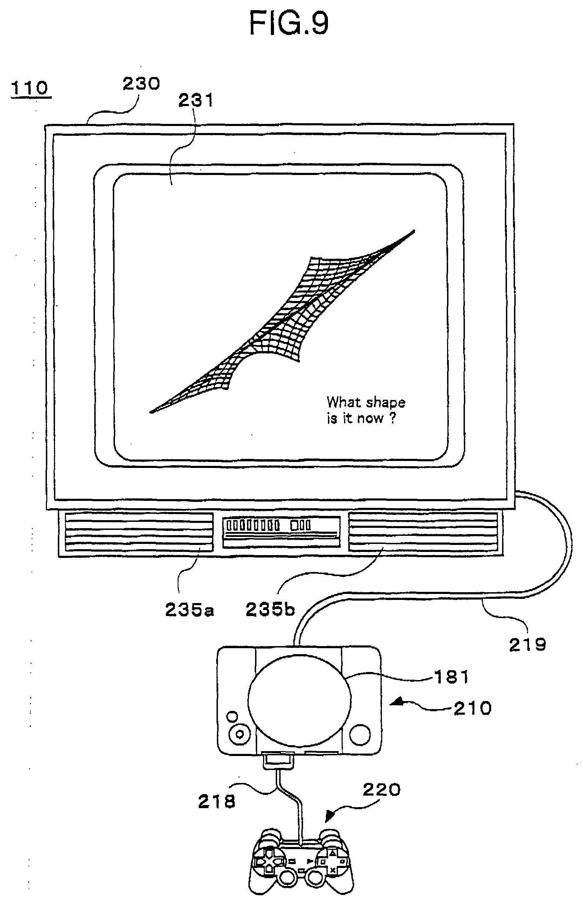

Fig. 9 is an overview diagram showing an entertainment system 110 constructed with an entertainment apparatus 210 as the main part.

As shown in Fig. 9, in the entertainment system 110, a TV receiver 230 for outputting images and sounds is connected to the entertainment apparatus 210 through a connection cable 219, and a controller 220 which a players operates is connected to the entertainment apparatus 210 through a cable 218. The entertainment apparatus 210 is provided at the top portion thereof with an optical disc drive 181 for accommodating a recording medium such as CD-ROM, DVD-ROM or the like and reading out information from the recording medium.

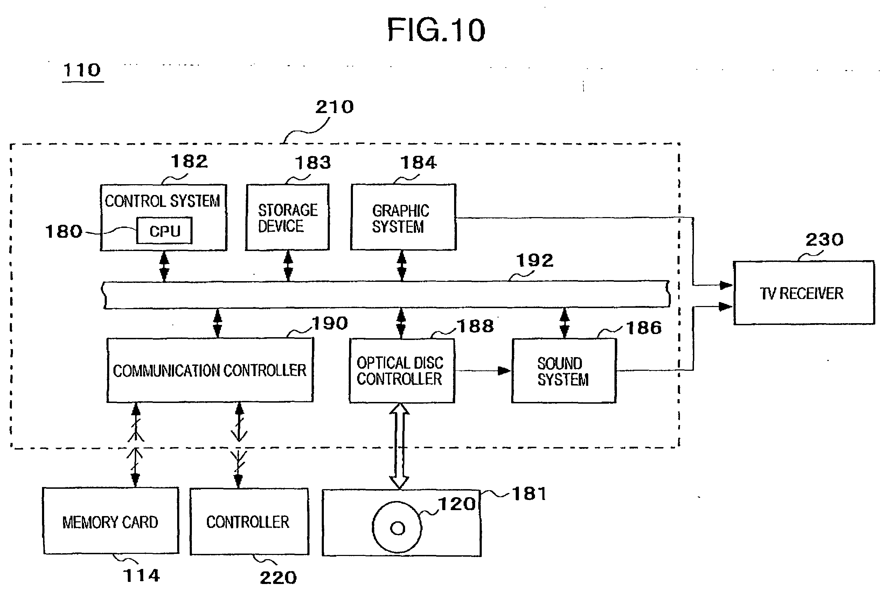

Fig. 10 is a block diagram showing the internal construction of the entertainment apparatus 210.

In Fig. 10, the entertainment apparatus 210 is equipped inside with a control system 182, a storage device 183, a graphic system 184, a sound system 186, an optical disc controller 188 and a communication controller 190. These units can communicate signals with one another through a system bus 192. A memory card 114 and a controller 220 are connected to the communication controller 190. The optical disc controller 188 controls an optical disc drive 181 to read out information recorded on an optical disc 120 loaded in the optical disc drive 181 and transmit the information through a system bus 192 to the control system 182.

The control system 182 is equipped with a central processing unit (CPU) 180. Data and programs read out from the optical disc 120 or the like are processed by the control system 182 containing the central processing unit 180 and a storage device 183. The processing result is transmitted through the system bus 192 to the graphic system 184, the sound system 186, etc.

The graphic system 184 comprises a frame buffer, a graphic processing unit (GPU) for drawing in the frame buffer, etc. The sound system 186 comprises a sound processing unit (SPU) for generating music sounds, effective sounds, etc.

The graphic system 184 and the sound system 186 receive data, commands, etc. from the system bus 192 to convert the data thus received to image data and sound data respectively, and then output these data to the TV receiver 230.

The TV receiver 230 is equipped with a screen 231 comprising a Braun tube or the like and speakers 235a and 235b. The image data transmitted from the entertainment apparatus 210 are displayed on the screen 231, and the sound data are output from the right and left speakers 235a and 235b. A player operates the controller 220 to advance the game while viewing/listening to the image/sound information.

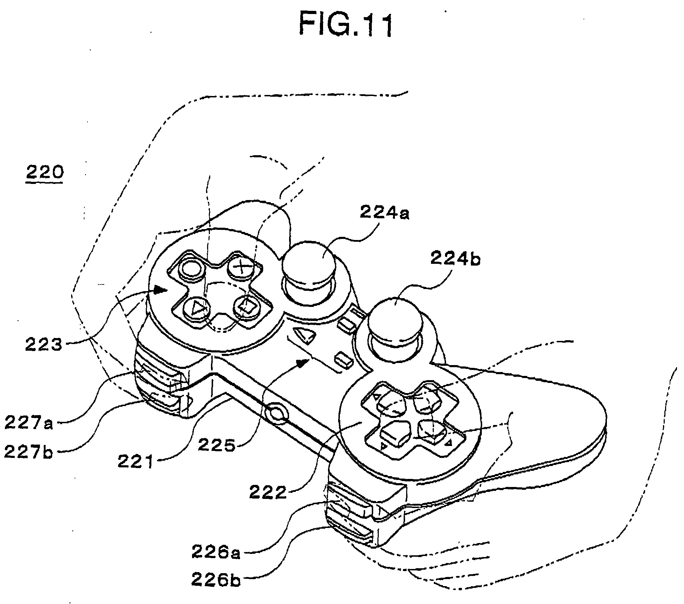

Fig. 11 is a schematic diagram showing the external appearance of the controller 220.

In Fig. 11, the controller 220 is equipped with a housing 221, and plural operating buttons and plural operating levers which are provided to the housing 221.

The controller 220 is equipped at both the ends of the upper portion thereof with cursor buttons 222 for indicating "up") "down", "right" and "left" and four operating buttons 223 which are provided with functions independently of each other. At the center position of the housing 221 are arranged special buttons 225 for indicating an operation start, etc., and right and left levers 224a and 224b used to indicate the direction. On the side surface of the housing 221 are arranged totally four slightly slender operating buttons 226a, 226b, 227a, 227b, two of which are arranged at the right side and the other two of which are arranged at the left side as shown in Fig. 11.

The player operates the operation buttons and the operation levers while viewing the screen 231 of the TV receiver 230, whereby an instruction can be made to a character on the game or a machine operation on the game can be performed.

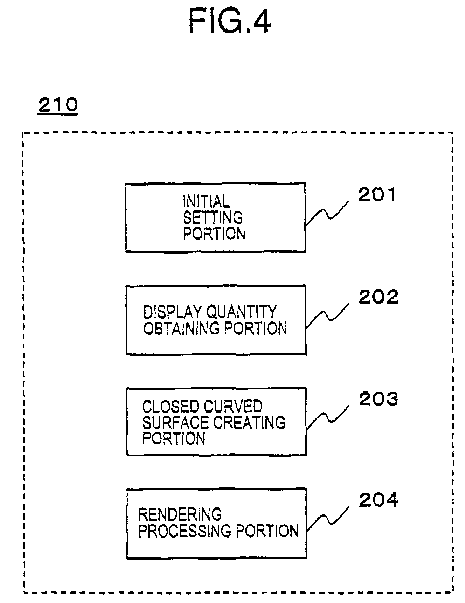

Next, the functional construction of the entertainment apparatus 210 to which the present invention is applied will be described with reference to Fig. 4.

The entertainment apparatus 210 to which the present invention is applied is equipped with an initial setting portion 201, a display quantity obtaining portion 202, a closed curved surface creating portion 203 and a rendering processing portion 204. These functions are implemented by executing the programs stored in the storage device 103 mainly through CPU 180 and the graphic system 184.

The initial specification portion 201 carries out various specification processing such as the specification of the quantity to be displayed, the specification of a method of converting the quantity to a parameter group, the specification of points to create a closed curved surface, the specification of a rendering type, etc.

The display quantity obtaining portion 202 carries out the processing of obtaining the quantity to be displayed, which is set in the initial specification portion 201. For example, if the quantity to be displayed is the actual time, the display quantity obtaining portion 202 obtains the actual time from a clock installed in the entertainment apparatus 210. If the quantity to be displayed is the speed in the game space, the display quantity obtaining portion 202 obtains the speed from a module for controlling the speed of the game software.

The closed curved surface creating portion 203 creates a closed curved surface on a virtual space on the basis of the quantity obtained in the display quantity obtaining portion 202 according to the condition set in the initial specification portion 201.

The rendering processing portion 204 carries out the processing of subjecting an effect such as shading or the like to the closed curved surface on the virtual space which is created in the closed curved surface creating portion 203, and then projecting the closed curved surface thus processed on a two-dimensional plane.

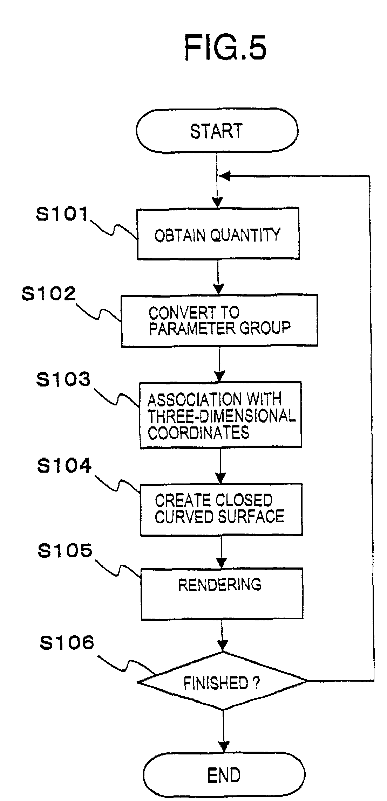

Next, the way how to display the quantity according to the embodiment of the present invention will be described. Fig. 5 is a flowchart showing the summary of the processing of this embodiment.

First, a case where the entertainment apparatus 210 displays "time" as the quantity on the TV receiver 230 will be described as a first example. "Time" may contain both of the actual time and the virtual time on a game. In the following description, "time" is assumed as the actual time indicated by a clock (not shown) installed in the entertainment apparatus 210.

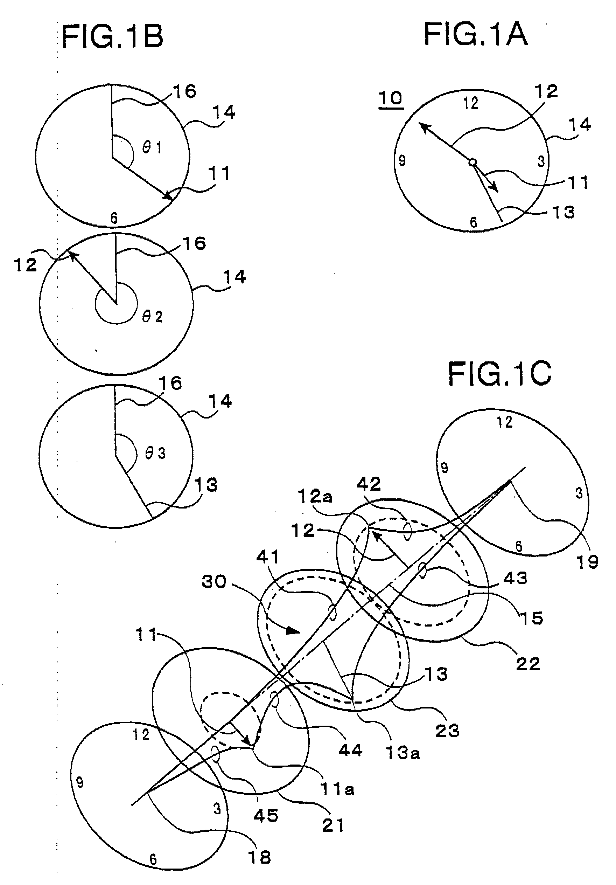

As shown in Fig. 5, the quantity to be displayed is obtained in step S101. In this case, the quantity to be displayed is "time", and the time is assumed as 50 minutes and 25 seconds past four as shown in Fig. 1A.

In Fig. 1A, reference numeral 10 represents a clock, reference numeral 11 represents the hour hand of the clock, reference numeral 12 represents the minute hand of the clock, reference numeral 13 represents the second hand of the clock, and reference numeral 14 represents the clockface.

The quantity obtained is converted to a parameter group in step S102. Here, the conversion to the parameter group means that if the quantity to be displayed is 50 minutes and 25 seconds past four, the quantity is converted to a set of parameters like (4,50,25). Of course, the present invention is not limited to this conversion method. For example, the quantity may be converted to a set of five parameters like (4,5,0,2,5). Here the quantity is assumed to be converted to a set of angles $(\theta 1, \theta 2, \theta 3)$ at which the hour hand 11, the minute hand 12 and the second hand 13 are opposed to the direction of the twelve o'clock (reference numeral 16) respectively. $\theta 1$, $\theta 2$ and $\theta 3$ can be easily determined from the fact that the hour hand 11 is rotated by 30 degrees per hour, the minute hand 12 is rotated by 6 degrees per minute and the second hand 13 is rotated by 6 degrees per second.

In step S103, the set of parameters thus converted are associated with the corresponding three-dimensional coordinate points. For the purpose of the description, "$\theta 1$" of $(\theta 1, \theta 2, \theta 3)$ is referred to as "first element", "$\theta 2$" is referred to as "second element" and "$\theta 3$" is referred to as "third element". Any method may be used to associate these elements with the three-dimensional coordinate points $(x_n, y_n, z_n)$. However, the following conversion is particularly used in this embodiment.

For the first element,

$$(x1, y1, z1) = (10, 5\sin\theta 1, 5\cos\theta 1)$$

for the second element.

$$(x2, y2, z2) = (30, 7\sin\theta 2, 7\cos\theta 2)$$

and for the third element,

$$(x3, y3, z3) = (20, 10\sin\theta 3, 10\cos\theta 3)$$

Through this conversion, the coordinate point corresponding to the hour hand 11 is moved along the circumference having a radius of 5 around the point (10, 0, 0) on the x-axis with the time variation, and makes a round in twelve hours, The coordinate point corresponding to the minute hand 12 makes a round along the circumference having a radius of 7 around the point (30, 0, 0) on the x-axis in one hour, and the coordinate point corresponding to the second hand 13 makes a round along the circumference having a radius of 10 around the point (20, 0, 0) on the x-axis in one minute.

In the case of the above associating relationship, the same result could be obtained if the rotational surfaces of the hour hand 11, the minute hand 12 and the second hand 13 of the clock 10 are separated from one another in three-dimensional space and they have a common axis among them so that they all move in parallel.

A closed curved surface is created in a virtual space in step 104. The closed curved surface is created by selecting n points in the virtual space containing at least the coordinate points determined in the step 103 and connecting these points (point group) with a curved line. For example, when points of n are set to be P1, P2, P3, Pn, a curved line connecting the points P1 and P2, a curved line connecting the points P2 and P3, .., and a curved line connecting the points Pn-1 and Pn are successively created, and finally a curved line connecting the points Pn and P1 is created, thereby creating the closed curved surface surrounded by these curved lines. That is, the points in the virtual space are provided with turns (that is, the points are sequentially numbered), and the respective neighboring numbered points are connected to each other by a curved line. This connecting operation of the neighboring points is repeated, and finally the start point and the end point are connected to each other by a curved line, thereby creating the closed curved surface surrounded by these curved lines. The selection of the points in the virtual space and the ordering (numbering) of the points may be set in advance, or randomly set at the time when the closed curved surface is created.

In this embodiment, it is assumed that three points (x1, y1, z1), (x2, y2, z2), (x3, y3, z3) and two points 18 (0,0,0) and 19 (40, 0, 0) on the x-axis, in total five points are selected, and these points are respectively given the order 2, 4, 3, 1, 5 (that is, second, fourth, third, first and fifth).

Any curved line may be selected to connect the points. However, in this embodiment, the points are connected to each other by using Bezier curved lines. The present invention is not limited to the Bezier curved lines, and the points may be connected to each other by straight lines, quadratic curves or the like to create a closed curved surface.

In step 105, the rendering processing of projecting the three-dimensional closed curved surface created in the step 104 onto the two-dimensional plane is carried out. In this embodiment, it is assumed that only the processing of merely projecting the outer periphery of the closed curved surface onto the two-dimensional plane is carried out.

Fig. 1C is a diagram showing a result of the processing. In Fig. 1C, the closed curved surface comprising reference numerals 41, 42, 43, 44 and 45 is the closed curved surface created in the step 104. The other illustrations and lines other than the above curved lines are provided for the purpose of the description.

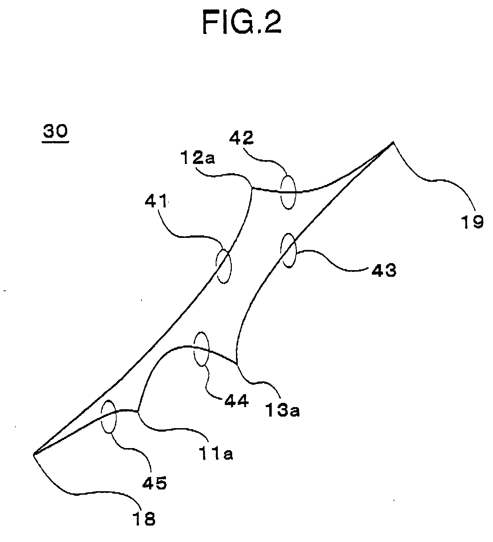

An axis 15 corresponds to the x-axis, a point 18 corresponds to the coordinate (0,0,0) and a point 19 corresponds to the coordinate (40,0,0). The point 11a corresponds to (x1, y1, z1), a point 12a corresponds to (x2, y2, z2) and a point 13a corresponds to (x3, y3, z3), and they correspond to the hour hand 11, the minute hand 12 and the second hand 13, respectively. Fig. 2 is a diagram showing only the closed curved surface 41, 42, 43, 44 and 45.

The time which is a display target is a quantity varying with time. When the rendering processing of the closed curved surface at some time point is finished, the step of obtaining the quantity (S101) and the subsequent steps are repeated again, whereby the closed curved surface based on the quantity at a subsequent time point can be continuously or intermittently created (S106). The time interval between repetitions of the above processing may be set to any value in accordance with the properties of the quantity. Further, by continuing to display the closed curved surface thus created on the screen for a fixed time, the history of the closed curved surface can be displayed and thus the display of the quantity can be further diversified.

Next, another embodiment of the step S102 of developing the quantity obtained into a parameter group will be described. In this embodiment, it is assumed that a speed meter used during execution of a game is visually displayed.

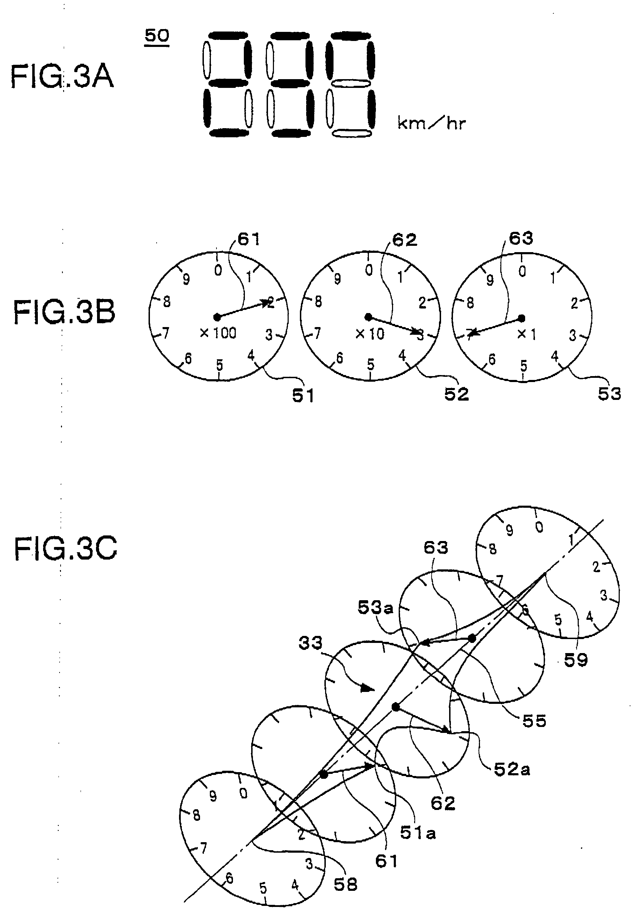

In the step S101, a virtual speed in a game is first obtained. In this embodiment, the speed is assumed to be 237km per hour as shown in Fig. 3A. In the step S102 of this embodiment, "237" is separated into respective digits and converted to a set of digit numbers (2,3,7). Thereafter, when the numerals of the respective digits of "237" are displayed on the clockface as shown in Fig. 3B, the angles at which the lines indicating the respective numerals intersect with the reference line in the direction of 0 respectively are represented by $\theta1$, $\theta2$, $\theta3$. As in the case of the foregoing embodiment, these angles are associated with the three-dimensional coordinate points (S103), and then a closed curved surface is created (S103) and subjected to the rendering processing (S105).

Fig. 3C is a diagram showing a rendering result in this case.

Next, another embodiment of the rendering processing of the step S105 will be described. The clock time is *set* as a quantity to be displayed as like the above embodiment, and also the same method of converting into the three-dimensional coordinate points as the above embodiment is used. Various methods such as a wire frame method, a shading method, a texture mapping method, etc. have been developed for the rendering processing. These methods can be easily performed by a graphic processing technique for a computer system. Further, the view point, the position of a light source, etc. may be arbitrarily set by using a conventional technique.

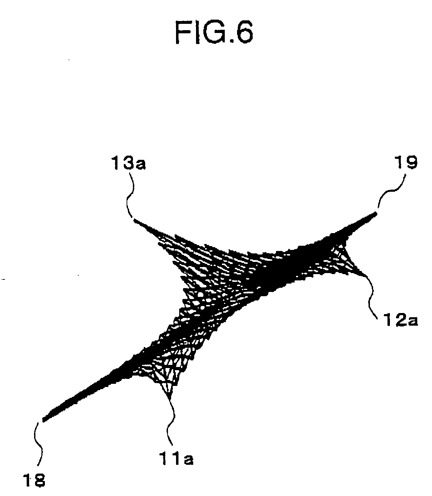

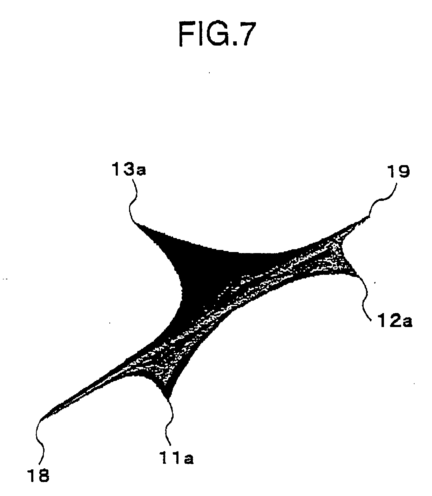

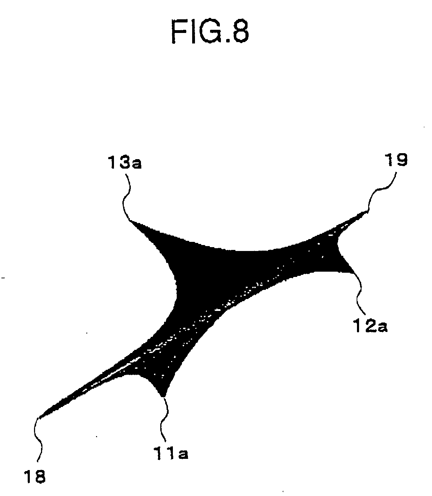

In the following embodiment, a closed curved surface representing a quantity which is created according to the present invention is displayed by the above techniques. Fig. 6 is a closed curved surface displayed by using the wire frame method, Fig. 7 is a closed curved surface displayed by using the shading method, and Fig. 8 is a closed curved surface displayed by using the texture mapping method.

In Figs. 6 to 8, the respective reference numerals have the same meaning as Fig. 1. That is, the line connecting the points 18 and 19 corresponds to the x-axis serving as the rotational axis, the point 18 corresponds to the coordinate point (0,0,0) and the point 19 corresponds to the coordinate point (40,0,0). The point 11a corresponds to (x1,y1,z1), the point 12a corresponds to (x2,y2,z2) and the point 13a corresponds to (x3,y3,z3), and they correspond to the hour hand 11, the minute hand 12 and the second hand 13, respectively.

In the above-described embodiment, the closed curved surface is created by the curved lines and then subjected to the rendering processing to visually display a certain quantity. However, the quantity display of the present invention is not limited to the closed curved surface. For example, a group of points may be set so as to create an open surface or only curved lines and then the rendering processing may be carried out to visually display a certain quantity.

As described above, according to the present embodiments, the quantities such as time, speed, etc. can be displayed visually beautifully and in various display styles. Further, quantity information required for games can be three-dimensionally displayed and thus embodiments of the present invention can induce users to take great interest in games.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

**Claims**

1. A program making a computer execute:

   a process of obtaining a quantity to be displayed;
   a process of associating the quantity with points in a virtual space;
   a process of connecting points in a virtual space containing at least the points associated by said process, to one another point with curved lines, and
   a process of rendering the curved lines.

2. A program making a computer execute:

a process of obtaining a quantity to be displayed;

a process of associating the quantity with points in a virtual space;

a process of connecting points in a virtual space containing the points associated by said process and predetermined reference points, to one another point with curved lines; and

a process of rendering the curved lines.

3. A program making a computer execute:

the process of obtaining a quantity to be displayed;

the process of converting the quantity into a parameter group containing two or more parameters;

the process of associating the respective parameters with points in a virtual space;

the process of successively connecting each of a group of points in the virtual space containing at least the points created by said process with curved lines to thereby create a closed curved surface surrounded by the curved lines; and

the process of rendering the closed curved surface.

4. The program as claimed in claim 3, wherein said processing of associating the respective parameters with the points in the virtual space is the processing of associating the parameters with points on circumferences of respective circles having the same central axis.

5. The program as claimed in claim 4, where in the group of points in the virtual space is contained a predetermined reference point provided on the center axis.

6. The program as claimed in any one of claims 3, 4 and 5, wherein said processing of rendering the closed curved surface contains any one or more of the following: wire frame processing, shading processing and texture mapping processing.

7. The program as claimed in any one of claims 3, 4 and 5, wherein the quantity to be displayed is variable with time, and the closed curved surface thus created is variable with variation of the quantity.

8. An information processing device comprising:

quantity obtaining means for obtaining a quantity to be displayed;

parameter conversion means for converting the quantity obtained by said quantity obtaining means into a parameter group containing two or more parameters;

three-dimensional coordinate associating means for associating the respective parameters converted by said parameter conversion means with three-dimensional coordinate points;

curved line calculating means for calculating a curved line connecting two points in the three-dimensional coordinate space; and

rendering means, wherein said curved line calculating means successively calculates a curved line connecting respective points in a group of points in the three-dimensional space containing at least the three-dimensional coordinate points determined by said three-dimensional associating means, and creates a closed curved surface surrounded by the curved lines, and said rendering means renders the closed curved surface.

9. A quantity display method using a computer, comprising;

a step of converting a quantity to be displayed into a parameter group containing two or more parameters;

a step of mapping the respective parameters to coordinate points in a three-dimensional space;

a step of successively connecting a group of points in a virtual space containing at least said coordinate points with curved lines to create a three-dimensional closed curved surface surrounded by the curved lines: and

a step of projecting the three-dimensional closed curved surface onto a two-dimensional plane.

10. A quantity display method using a computer image comprising:

a step of converting a quantity to be displayed into a parameter group containing two or more parameters;

a step of allocating the respective parameters to angles with respect to a reference position around a specific axis provided in a virtual space;

a step of separately arranging plural radius vectors rotating around the axis, wherein the directions of said plural radius vectors correspond to said angles respectively ; and

a step of outputting the plural radius vectors as a computer image.

11. A computer-readable recording medium in which said program as claimed in any one of claims 1 to 7 is recorded.

# FIG.1B

# FIG.1A

# FIG.1C

# FIG.2

FIG.3A 50 km/hr

FIG.3B

61 62 63
×100 ×10 ×1
51 52 53

FIG.3C

63 53a 33 59 55 52a 62 51a 61 58

# FIG.4

<u>210</u>

```
INITIAL
SETTING          〜 201
PORTION
```

```
DISPLAY QUANTITY    〜 202
OBTAINING PORTION
```

```
CLOSED CURVED      〜 203
SURFACE CREATING
PORTION
```

```
RENDERING          〜 204
PROCESSING PORTION
```

# FIG.5

```
        ┌─────────────┐
        │    START    │
        └─────────────┘
               │
               ▼  ◄──────────────┐
 S101   ┌─────────────────┐      │
        │ OBTAIN QUANTITY │      │
        └─────────────────┘      │
               │                 │
               ▼                 │
 S102   ┌─────────────────┐      │
        │   CONVERT TO    │      │
        │ PARAMETER GROUP │      │
        └─────────────────┘      │
               │                 │
               ▼                 │
 S103   ┌─────────────────┐      │
        │ ASSOCIATION WITH│      │
        │THREE-DIMENSIONAL│      │
        │   COORDINATES   │      │
        └─────────────────┘      │
               │                 │
               ▼                 │
 S104   ┌─────────────────┐      │
        │ CREATE CLOSED   │      │
        │ CURVED SURFACE  │      │
        └─────────────────┘      │
               │                 │
               ▼                 │
 S105   ┌─────────────────┐      │
        │   RENDERING     │      │
        └─────────────────┘      │
               │                 │
               ▼                 │
 S106        ╱────╲              │
            ╱      ╲             │
           ╱FINISHED?╲───────────┘
            ╲      ╱
             ╲────╱
               │
               ▼
        ┌─────────────┐
        │     END     │
        └─────────────┘
```

# FIG.6

# FIG.7

# FIG.8

# FIG.9

What shape
is it now ?

# FIG.10

EP 1 143 382 A2

# FIG.11

220

224a

224b

223

227a
227b

221

225

222

226a
226b

# FIG.12